# EUROPEAN PATENT SPECIFICATION

(11) **EP 2 047 661 B1**
(45) Date of publication and mention of the grant of the patent: **13.06.2012**
(21) Application number: 07757093.5
(22) Date of filing: 16.02.2007
(51) Int. Cl.: H04L 29/08

(54) **INFORMATION NUGGET SHARING AMONG MOBILE PHONES**
INFORMATIONS-NUGGET-SHARING ZWISCHEN MOBILTELEFONEN
PARTAGE DE GROUPES D'INFORMATIONS ENTRE DES TÉLÉPHONES MOBILES

(30) Priority: 28.07.2006 US 460676
(43) Date of publication of application: 15.04.2009
(73) Proprietor: Sony Ericsson Mobile Communications AB, 221 88 Lund (SE)
(72) Inventor: THOMAS, Gary, Donald, Cary, NC 27513 (US); MARTIN, Richard, E, Jr., Apex, NC 27539 (US)
(74) Representative: Banzer, Hans-Jörg
(86) International application number: PCT/US2007/062281
(87) International publication number: WO 2008/014014

(56) References cited:
- GB-A- 2 389 742
- US-A1- 2005 076 124

## Description

### BACKGROUND OF THE INVENTION

Portable mobile communications devices such as mobile phones are becoming more sophisticated and include many new features and capabilities. Short range RF or IRDA communication capabilities that allow for communication and data exchanges among mobile phones, mobile phone accessories, or other devices is a commonly included feature with most current mobile phones. Such short range communication capabilities can be used to allow users to collect and share information "nuggets" from a community of like minded individuals. The purpose of sharing these information nuggets may be recreational (to collect, save and trade them much like baseball cards are traded in the physical world) or the transfer of information nuggets may also be done to accomplish a specific goal of relaying focused information that the sending party believes will be of particular interest to the receiving party.

What is needed is a software application that can utilize a mobile phone's short range communication capabilities with other mobile phones and devices to share information nuggets among a community of users.

Relevent prior art documents are GB 2,389,742 and US 2005/0076124.

### BRIEF SUMMARY OF THE INVENTION

Disclosed is a system, method, and computer program product for exchanging categorized information nuggets stored in a database accessible to a portable mobile communication device with other similarly equipped portable mobile communication devices. The presence of another portable mobile communication device capable of exchanging categorized information nuggets is discovered and a connection is established. Information nugget category data is exchanged with the other portable mobile communication device to determine whether there are common categories shared by each portable mobile communication device. Information nuggets for common categories are then exchanged with the other portable mobile communication device. The information nuggets can be displayed and saved by the receiving portable mobile communication device. The information nuggets can also be date/time and location stamped to add additional contextual data about the information nuggets.

The discovering step is based on broadcasted signature beacons that emanate from participating information nugget enabled portable mobile communication devices. Each device transmits a signature beacon to indicate the presence of an information nugget software application and listens for a signature beacon acknowledgement to indicate the presence of another information nugget software application. In addition, each device listens for a signature beacon to indicate the presence of another information nugget software application and transmits a signature beacon acknowledgement to indicate the presence of an information nugget software application.

A connection is established with the discovered portable mobile communication device using a Bluetooth^{™} transceiver module or an infrared IRDA module resident in the portable mobile communication device.

### BRIEF DESCRIPTION OF THE DRAWINGS

Figure 1 is an environmental block diagram of multiple users executing an information nugget software application in a portable mobile communications device according to the present invention.
Figure 2 is a block diagram of mobile phone components used to implement the processes of the present invention.
Figure 3 is a flowchart describing an information nugget sharing process in accordance with an embodiment of the present invention.
Figure 4 is a flowchart describing the set session preferences process in accordance with an embodiment of the present invention.

### BEST MODE FOR CARRYING OUT THE INVENTION

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

As conceived, the invention relates to the transfer of information nuggets via short range communication (Bluetooth, IRDA, etc.) with the transfer taking place while the sending and receiving participants are in close proximity with one another. However, nothing in the present disclosure is intended to limit the possibility that the information nuggets may be shared using a wider area communication medium such as cellular communication or other wireless means.

The present invention proposes an information nugget software application in a mobile phone. A mobile phone executing such an application stores categorized snippets of information (baseball statistics, trivia, restaurant recommendations, etc.) in memory. As the user moves around during his daily routine the information nugget software application periodically transmits select data via an embedded short range communications means (e.g., Bluetooth, IRDA, WiFi) as a beacon available to be received by any other user having a similar information nugget software application executing in his mobile phone or other portable mobile communications device. Alternately, the sending device may choose to send the data in response to receiving an indication that there is an eligible receiving device within range. The data elements may be categorized and tagged for easy sorting by a receiving party. As other users move about during their daily routine they will from time to time come into close proximity with one of these sending devices and the data elements will be exchanged. As time goes on a collection of data elements will be built up in the receiving devices. This collection can be used, enjoyed and shared as a recreational activity. The selection of data categories and specific data elements to be presented or offered may be determined by preferences established by the participant in the community who is offering the data. The determination of which data elements to accept and which to ignore can be made by the community member receiving the data and may be based on his personal interests or preferences. This selection process may be automatic based on preferences stored in the mobile phone or device of the receiving participant or may be done by a manual process in real time as the data is received. Once collected, these information nuggets can be saved, forwarded or "traded" with other members of the community. The transfer of information nuggets may also be done to accomplish a specific goal of relaying focused information.

For example, one member of an information sharing community might broadcast a continuously updated account of the distance he has traveled from the site of a traffic accident while traveling in the opposite direction on a highway. This data could be received by other members of the information sharing community as they sit in the traffic jam created by the accident. This data would be very interesting and useful to estimate how long their wait will be.

As conceived, the present invention relates to the transfer of these information nuggets via short range communication (Bluetooth, IRDA, etc.) therefore, each receiving party sitting in the traffic jam will receive distance information appropriate to his actual position with respect to the accident (within the tolerance of the range of the short range communication method used).

As an extension to the implementation described above, as data elements are received, the receiving device could add a date, time and/or location stamp to each data element. In this way a database could be built up, either in the individual mobile phone or device or at a central server location to which all users would upload their collected information elements. This database would indicate the type of information most likely to be gathered at a particular geographic spot. This demographic information could be used for example to determine the best location to establish a particular business (like a sports bar) by determining a geographic location where sports enthusiasts tend to congregate (based on having received a high percentage of sports-related nuggets while passing through that spot).

To further illustrate the context of the present invention, a few example implementations have been created and described in the scenarios below. These illustrations provide a small glimpse of the possible uses for the present invention and are not intended to be limiting in any way. Those of ordinary skill in the art could readily devices alternate and additional scenarios that apply to the teachings of the present invention.

Marty is a Software Products salesman who travels extensively throughout his assigned territory of North Carolina. In his spare time he is an avid golfer and fisherman. He also enjoys reading mystery novels but likes to select between the latest releases based on real world reviews. One way Marty supports his pursuit of these interests is by belonging to an information nugget sharing community that he learned about when he purchased his latest mobile phone.

As he prepares to leave his house each morning he switches on his mobile phone and executes the embedded information sharing application. Before leaving the application to run in the background, he makes a few quick selections to customize how the application will interact with other mobile phones or devices having similar embedded applications. For instance, this morning he selects the option to exchange information from all stored preference categories rather than from just one. Marty has previously set up the information database in his phone with the three categories: Golf, Fishing and Books. Within the Books category he has further selected only the sub-category: Mystery Novels.

Marty then updates his stored database with information on the novel he just finished reading last night. He includes the title, author and a brief review including his rating of the book and a reference to another novel that he feels was equally good. Finally he selects: "Preview information before storing to database" instead of the alternative: "Save all received information transparently" and sets off on his travels for the day.

Throughout the day, Marty's phone, under the control of the information nugget software application running in the background, periodically transmits a signature indicating that it contains the information nugget software application and is available to share information. While not transmitting this signature, it "listens" for a similar signature transmitted from any other mobile device in the vicinity.

Before long, Marty's mobile phone receives a signature from another mobile phone owned by Tom. The two phones then set up a communication link and use a handshaking routine using the appropriate protocol to determine if the applications running in the two phones currently have a common set of preference categories selected. In this first instance the applications determine that Marty and Tom have both selected "Golf" and "Books" so the two phones begin to share information, drawn from each phone's database, relating to those two topics.

Since Marty has selected the option to "preview information before storing to database", he hears a beep and looks at his mobile display. There he sees the message:
From Member: 1072348
Category: Golf
Sub Category: None
Received: 06/15/2006 15:29:13
Received Location: N35°51.97428, W78°52.27386
Content: Hole in one, Preston Grove # 16, 162 yds, May 6, 2006, 5 Wood.

Since Marty has always dreamed of hitting a hole in one, rather than discarding it he selects to add this information to his database with the thought that some day he will go through the database to see if he can determine which hole, at which course yields the most "aces" and therefore would give him the best chance of realizing his dream.

Although both phones also have the preference "Books" selected, Tom's phone does not currently contain any information in the "Books" category of its database. In this case, transparent to Marty, his phone transmits his book review to Tom's phone before breaking off communications with it.

The next day as he is driving through the high country on his way to his next sales meeting Marty hears a beep and looks at his phone display. He sees:
From Member: 2651238
Category: Fishing
Sub Category: All
Received: 06/16/2006 14:15:23
Received Location: N36°15.0012 W081°40.3212
Content: Rainbow Trout, 12" (11oz)., Howard's Creek, June 16, 2006, 11:15 AM.

Since Marty is always interested in new fishing holes he stores the information to his database. Immediately he hears another beep and sees:
From Member: 0129865
Category: Fishing
Sub Category: Trout
Received: 06/16/2006 14:16:05
Received Location: N36° 15.0009 W081°40.3253
Content: Caught 14" Brown Trout @ Howard's Creek, June 16, 2006, using wet fly. Water temp 48 deg.

Once again Marty selects to store this piece of information in his database and once again immediately hears a beep announcing yet another fish caught. As Marty wonders why there seem to be so many fishermen congregated in this one area, each with a story to tell, he rounds a corner and sees a huge banner strung across the road that says: "Fishing Tournament Today - Howard's Creek - Cash Prizes".

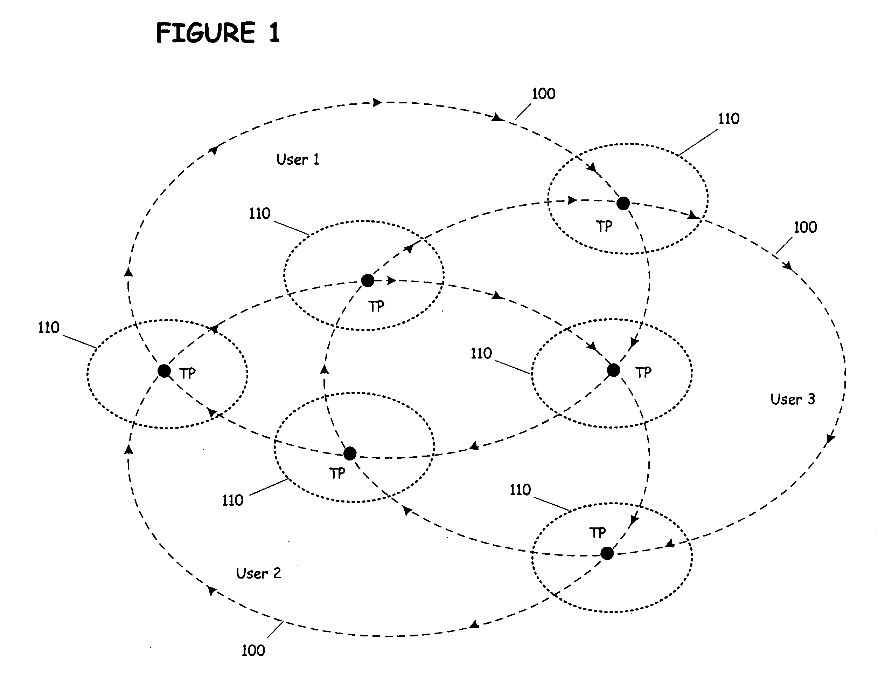

Figure 1 is an environmental block diagram of multiple users executing an information nugget software application in a portable mobile communications device according to the present invention. Each user travels a random path 100 throughout a given time period. From time to time a user will come into proximity 110 with another user such that each user's portable mobile communications device is close enough to the other for a short range communication link to be established. These points are denoted as transfer points (TP) in Figure 1. At each transfer point, a user's portable mobile communications device can discover and communicate with another user's portable mobile communications device under the control of an information nugget software application.

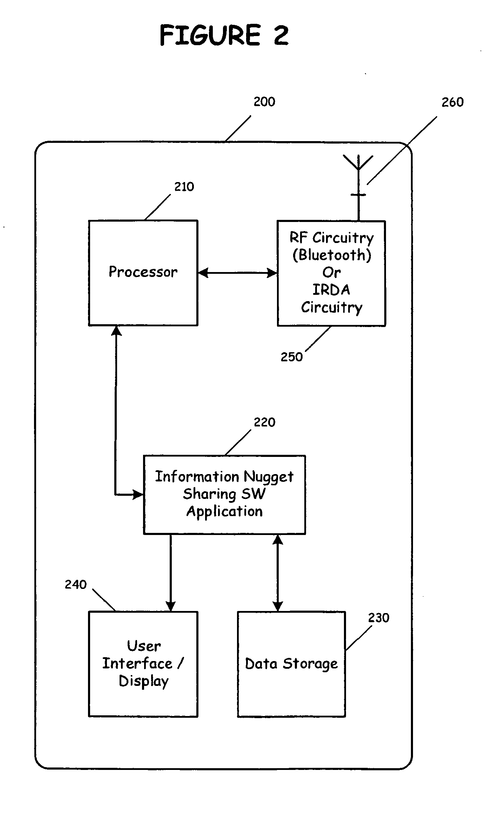

Figure 2 is a block diagram of mobile phone components used to implement the processes of the present invention A mobile phone 200 (or portable mobile communications device) includes a processor 210 coupled with and capable of executing an information nugget software application 220. The information nugget software application 220 is also coupled with data storage 230 (internal memory, removable memory, or the like) for storing data and user interface/display means 240 for entering data and displaying data exchanged via the information nugget software application 220. The user interface component 240 can include a keypad, touchscreen, and/or a peripheral device attached to the mobile phone, etc. Transceiver communications means 250 such as a Bluetooth RF module or an infrared IRDA module is coupled with the processor to carry out the physical data exchanges between and among other mobile phones executing similar information nugget software applications. An antenna system 260 is also pictured coupled with the communication means 250.

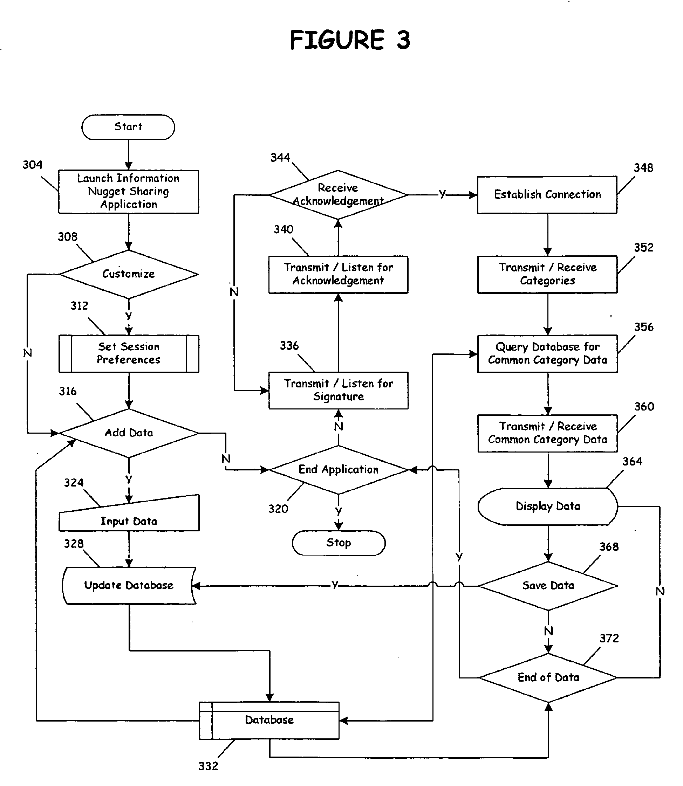

Figure 3 is a flowchart describing an information nugget sharing process using the components described in Figure 2 in accordance with an embodiment of the present invention. The first step is to launch or execute 304 the information nugget software application residing within the mobile phone. Upon launch, the application prompts the user whether and how to customize the users preferences 308. The user can then set preference parameters for sending and receiving specific categories of data 312 before being prompted whether to add data. The user could, for instance, compose and add a movie review of a film he saw last night. Otherwise, the program proceeds directly to the prompt asking the user whether to add any data nuggets 316.

Adding data comprises inputting data nuggets into the mobile phone 324. Data nuggets are input according to categories and sub-categories so that they can be indexed properly during database querying operations. The data nugget is then passed to a process that updates the database 328 which adds the data nugget to a database 328 residing in storage means in or associated with the mobile phone. Control is returned to the 'add data' prompt until the user has no more data nuggets to add.

The user is then prompted whether to terminate the information nugget software application 320. If continuing, the information nugget software application (now executing in the background) begins to transmit a signature beacon announcing its presence and willingness to communicate with other information nugget software applications while simultaneously listening for another user(s) signature beacon 336. In step 340, the information nugget software application listens for a signature acknowledgment indicating if another user/device has received the transmit signature beacon or if the present device has received the transmit beacon of another device 340.

If a signature acknowledgement is received 344 the information nugget software applications will establish a connection 348 between or among the respective mobile phones. The information nugget software application will then begin to transmit and receive category data 352. Transmitted category data from the database indicates the data the user has made available in this session via preferences that were earlier set. If no preferences for the session were set the default is to transmit all categories.

The categories received by each mobile phone are then used to query each mobile phone's database for commonality 356. Once common categories are identified, each device will transmit (and receive) only data nuggets associated with common categories 360. Received data nuggets are then displayed 364 by the mobile phone. The information nugget software application will then prompt the user whether to save the data nugget 368. If affirmative, the data nugget will be processed by the update database procedure 328 and stored in the database 332. The information nugget software application then determines if there are any more data nuggets 372. If the option not to save the data nugget was selected, then control is passed directly to the 'end of data' decision process 372. If there are more data nuggets, the next one is displayed 364 and processed. When there are no more data nuggets the information nugget software application prompts the user whether to end the application 320. The user can instruct the information nugget software application to terminate or to return to transmitting and listening for signatures 336.

If no acknowledgement to the transmitting signature beacon is received the information nugget software application will continue to re-transmit the signature beacon 336 on a periodic basis. The user can also terminate the program manually at any time, change session preferences, or add new data by accessing the user interface of the information nugget software application.

The data nuggets can be displayed and stored similar to SMS text messages. Or, the information nugget software application can format the received data in an entirely different manner for purposes of display and storage.

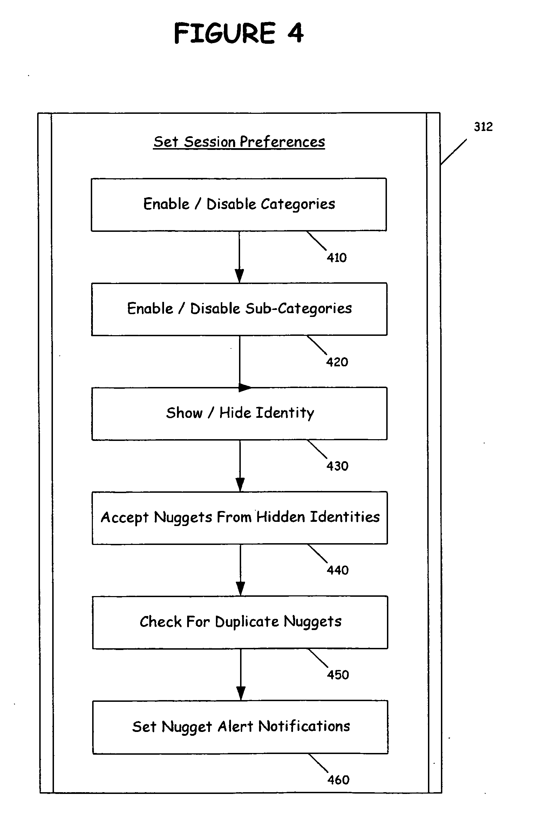

Figure 4 is a flowchart describing the set session preferences 312 process in accordance with an embodiment of the present invention. The processes shown in the flowchart in Figure 4 are in no particular order. The set session preferences 312 process allows the user to customize the information nugget sharing application for the present session and until it is changed again by the user. Six customization options are presented in Figure 4. One of ordinary skill in the art could add more customization options without affecting the scope of the present invention. Thus, these six customization options are not intended to be limiting to the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The first two customization options in Figure 4 allow the user to enable / disable specific categories 410 and sub-categories 420. This allows the user to filter the data he is willing to send and receive based on content. If no preference is set by the user, the default can be to enable all categories. This would have the effect of accepting all information nuggets not otherwise filtered out. The next customization option allows the user to show / hide his identity when sending an information nugget 430. This is followed by a customization option deciding whether to accept information nuggets from senders having hidden identities 440. The next customization option is designed to deal with the possibility of receiving duplicate information nuggets 450 should two users cross paths more than once, or if an information nugget that was already received has been passed to multiple users and is made available from a different source. One filter for this option is to reject all received information nuggets which originated at one time from the user. This avoids the situation in which the same information nugget is passed back and forth between users that may cross paths many times. The last customization option allows the user to set nugget alert notifications 460 to be either audible or silent.

A system according to embodiments of the present invention may include means for adding a date/time stamp to the received information nugget. A system according to embodiments of the present invention may include means for adding a location stamp to the received information nugget. A system according to embodiments of the present invention may include wherein the discovering step includes means 220, 250 for transmitting a signature beacon 336 to indicate the presence of an information nugget software application 220; and means 220, 250 for listening for a signature beacon acknowledgement 340 to indicate the presence of another information nugget software application 220. The discovering step may include means 220, 250 for listening for a signature beacon 336 to indicate the presence of another information nugget software application 220; and means 220, 250 for transmitting a signature beacon acknowledgement 340 to indicate the presence of an information nugget software application 220. The means 250 for establishing a connection 348 with the discovered portable mobile communication device may be a Bluetooth^{™} transceiver module 250 resident in the portable mobile communication device 200. The means 250 for establishing a connection 348 with the discovered portable mobile communication device may be an IRDA transceiver module 250 resident in the portable mobile communication device 200.

Embodiments of the present invention may include a computer program product embodied on a computer readable storage medium for exchanging categorized information nuggets stored in a database 230 accessible to a portable mobile communication device 200 with other similarly equipped portable mobile communication devices, the computer program product comprising: computer program code for discovering the presence 336, 340 of another portable mobile communication device capable of exchanging categorized information nuggets; computer program code for establishing a connection 348 with the discovered portable mobile communication device; computer program code for exchanging information nugget category data 352 with the other portable mobile communication device to determine whether there are common categories 356 shared by each portable mobile communication device; and computer program code for exchanging information nuggets for common categories 360 with the other portable mobile communication device.

The computer program product may further include computer program code for displaying a received information nugget 364 on a display 240 coupled with the portable mobile communication device 200; and computer program code for saving the received information nugget 368 in the database 230 accessible to the portable mobile communication device 200. The computer program product may further include computer program code for adding a date/time stamp to the received information nugget. The computer program product may further include computer program code for adding a location stamp to the received information nugget. The discovering step may include computer program code for transmitting a signature beacon 336 to indicate the presence of an information nugget software application 220; and computer program code for listening for a signature beacon acknowledgement 340 to indicate the presence of another information nugget software application 220. The discovering step may further includes computer program code for listening for a signature beacon 336 to indicate the presence of another information nugget software application 220; and computer program code for transmitting a signature beacon acknowledgement 340 to indicate the presence of an information nugget software application 220. The computer program code for establishing a connection 348 with the discovered portable mobile communication device may operate a Bluetooth^{™} transceiver module 250 resident in the portable mobile communication device 200. The computer program code for establishing a connection 348 with the discovered portable mobile communication device may operate an IRDA transceiver module 250 resident in the portable mobile communication device 200.

Embodiments of the present invention may include a method of exchanging information nuggets stored in a database 230 accessible to a portable mobile communication device 200 with other similarly equipped portable mobile communication devices, the method comprising: discovering the presence 336, 340 of another portable mobile communication device capable of exchanging information nuggets; establishing a connection 348 with the discovered portable mobile communication device; and exchanging information nuggets 360 with the other portable mobile communication device. The method may further include: displaying a received information nugget 364 on a display coupled with the portable mobile communication device; and saving the received information nugget 368 in the database accessible to the portable mobile communication device. The discovering step may include: transmitting a signature beacon 336 to indicate the presence of an information nugget software application 220; and listening for a signature beacon acknowledgement 340 to indicate the presence of another information nugget software application 220. The discovering step may further include: listening for a signature beacon 336 to indicate the presence of another information nugget software application 220; and transmitting a signature beacon acknowledgement 340 to indicate the presence of an information nugget software application 220.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method of exchanging categorized information nuggets stored in a database accessible to a portable mobile communication device (200) with other similarly equipped portable mobile communication devices (200), the method comprising:
discovering the presence (336, 340) of another portable mobile communication device (200) capable of exchanging categorized information nuggets;
establishing a connection (348) with the discovered portable mobile communication device;
exchanging information nugget category data with the other portable mobile communication device (352) to determine whether there are common categories (356) shared by each portable mobile communication device;
exchanging information nuggets for common categories (360) with the other portable mobile communication device;
adding a location stamp to the information nugget received from the other portable mobile communication device;
storing the location stamped information nugget in a database; and
determining a type of information most likely to be gathered at a particular geographic location based on all location stamped information nuggets stored in the database.

2. The method of claim 1 further comprising: displaying (364) a received information nugget on a display (240) coupled with the portable mobile communication device (200); and saving (368) the received information nugget in the database (332) accessible to the portable mobile communication device (200).

3. The method of claim 1 further comprising adding a date/time stamp to the received information nugget.

4. The method of claim 1 wherein the discovering step comprises: transmitting a signature beacon (336) to indicate the presence of an information nugget software application (220); and listening for a signature beacon acknowledgement (340) to indicate the presence of another information nugget software application (220).

5. The method of claim 1 wherein the discovering step further comprises: listening for a signature beacon (336) to indicate the presence of another information nugget software application (220); and transmitting a signature beacon acknowledgement (340) to indicate the presence of an information nugget software application (220).

6. The method of claim 1 wherein establishing a connection (348) with the discovered portable mobile communication device (220) is achieved via a Bluetooth^{™} transceiver module (250) resident in the portable mobile communication device (200).

7. The method of claim 1 wherein establishing a connection (348) with the discovered portable mobile communication device (200) is achieved via an IRDA transceiver module (250) resident in the portable mobile communication device (200).

8. A system for exchanging categorized information nuggets stored in a database (230) accessible to a portable mobile communication device (200) with other similarly equipped portable mobile communication devices, the system comprising:
means (220) for discovering the presence (336, 340) of another portable mobile communication device capable of exchanging categorized information nuggets;
means (250) for establishing a connection (348) with the discovered portable mobile communication device;
means (220, 250) for exchanging information nugget category data (352) with the other portable mobile communication device to determine whether there are common categories (356) shared by each portable mobile communication device;
means (220, 250) for exchanging information nuggets for common categories (360) with the other portable mobile communication device;
means (220) for adding a location stamp to the information nugget received from the other portable mobile communication device;
means (220, 230) for storing the location stamped information nugget in the database; and
means (220) for determining a type of information most likely to be gathered at a particular geographic location based on all location stamped information nuggets stored in the database.

9. The system of claim 8 further comprising:
means for displaying (240) a received information nugget on a display coupled with the portable mobile communication device (200); and
means for saving (220) the received information nugget in the database (230) accessible to the portable mobile communication device (200).

10. The system of claim 8 further comprising means for adding a date/time stamp to the received information nugget.

11. The system of claim 8 wherein the discovering step comprises:
means (220, 250) for transmitting a signature beacon (336) to indicate the presence of an information nugget software application (220); and
means (220, 250) for listening for a signature beacon acknowledgement (340) to indicate the presence of another information nugget software application (220).

12. The system of claim 8 wherein the discovering step further comprises:
means (220, 250) for listening for a signature beacon (336) to indicate the presence of another information nugget software application (220); and
means (220, 250) for transmitting a signature beacon acknowledgement (340) to indicate the presence of an information nugget software application (220).

13. The system of claim 8 wherein the means (250) for establishing a connection (348) with the discovered portable mobile communication device is a Bluetooth^{™} transceiver module (250) resident in the portable mobile communication device (200).

14. The system of claim 8 wherein the means (250) for establishing a connection (348) with the discovered portable mobile communication device is an IRDA transceiver module (250) resident in the portable mobile communication device (200).

## Patentansprüche

1. Verfahren zum Austauschen von kategorisierten Informationsbrocken, welche in einer Datenbank gespeichert sind, die für eine tragbare mobile Kommunikationsvorrichtung (200) mit anderen ähnlich ausgestatteten tragbaren mobilen Kommunikationsvorrichtungen (200) zugreifbar ist, wobei das Verfahren umfasst:
Entdecken des Vorhandenseins (336, 340) von einer anderen tragbaren mobilen Kommunikationsvorrichtung (200), welche in der Lage ist, kategorisierte Informationsbrocken auszutauschen;
Erstellen einer Verbindung (348) mit der entdeckten tragbaren mobilen Kommunikationsvorrichtung;
Austauschen von kategorisierten Daten eines Informationsbrockens mit der anderen tragbaren mobilen Kommunikationsvorrichtung (352), um zu entscheiden, ob gemeinsame Kategorien (356) vorhanden sind, welche von jeder tragbaren mobilen Kommunikationsvorrichtung gemeinsam benutzt werden;
Austauschen von Informationsbrocken für gemeinsame Kategorien (360) mit der anderen tragbaren mobilen Kommunikationsvorrichtung;
Hinzufügen eines Ortstempels zu dem Informationsbrocken, welcher von der anderen tragbaren mobilen Kommunikationsvorrichtung empfangen wird;
Speichern des mit einem Ort versehenen Informationsbrockens in einer Datenbank; und
Bestimmen eines Typs einer Information, welcher am wahrscheinlichsten an einem bestimmten geographischen Ort aufgesammelt wird, abhängig von allen mit einem Ort versehenen Informationsbrocken, welche in der Datenbank gespeichert sind.

2. Verfahren nach Anspruch 1, darüber hinaus umfassend: Darstellen (364) eines empfangenen Informationsbrockens auf einer Anzeige (240), welche mit der tragbaren mobilen Kommunikationsvorrichtung (200) gekoppelt ist; und Speichern (368) des empfangenen Informationsbrockens in der Datenbank (332), welche für die tragbare mobile Kommunikationsvorrichtung (200) zugreifbar ist.

3. Verfahren nach Anspruch 1, darüber hinaus umfassend Hinzufügen eines Datum-/Zeit-Stempels zu dem empfangenen Informationsbrocken.

4. Verfahren nach Anspruch 1, **dadurch gekennzeichnet, dass** der Entdeckungsschritt umfasst: Übertragen eines Signaturindikators (336), um das Vorhandensein einer Informationsbrocken-Softwareapplikation (220) anzuzeigen; und Horchen nach einer Signaturindikator-Bestätigung (340), um das Vorhandensein einer anderen Informationsbrocken-Softwareapplikation (220) anzuzeigen.

5. Verfahren nach Anspruch 1, **dadurch gekennzeichnet, dass** der Entdeckungsschritt darüber hinaus umfasst:
Horchen nach einem Signaturindikator (336), um das Vorhandensein einer anderen Informationsbrocken-Softwareapplikation (220) anzuzeigen; und Übertragen einer Signaturindikator-Bestätigung (340), um das Vorhandensein einer Informationsbrocken-Softwareapplikation (220) anzuzeigen.

6. Verfahren nach Anspruch 1, **dadurch gekennzeichnet, dass** das Erstellen einer Verbindung (348) mit der entdeckten tragbaren mobilen Kommunikationsvorrichtung (220) mittels eines Bluetooth^{™}-Transceivermoduls (250) erzielt wird, welches sich in der tragbaren mobilen Kommunikationsvorrichtung (200) befindet.

7. Verfahren nach Anspruch 1, **dadurch gekennzeichnet, dass** das Erstellen einer Verbindung (348) mit der entdeckten tragbaren mobilen Kommunikationsvorrichtung (200) mittels eines IRDA-Transceivermoduls (250) erzielt wird, welches sich in der tragbaren mobilen Kommunikationsvorrichtung (200) befindet.

8. System zum Austauschen von kategorisierten Informationsbrocken, welche in einer Datenbank (240) gespeichert sind, die für eine tragbare mobile Kommunikationsvorrichtung (200) mit anderen ähnlich ausgestatteten tragbaren mobilen Kommunikationsvorrichtungen zugreifbar ist, wobei das System umfasst:
Mittel (220), um das Vorhandensein einer anderen tragbaren mobilen Kommunikationsvorrichtung zu entdecken, welche in der Lage ist, kategorisierte Informationsbrocken auszutauschen;
Mittel (250), um eine Verbindung (348) mit der entdeckten tragbaren mobilen Kommunikationsvorrichtung zu erstellen;
Mittel (220, 250), um kategorisierte Daten (352) eines Informationsbrockens mit der anderen tragbaren mobilen Kommunikationsvorrichtung auszutauschen, um zu bestimmen, ob gemeinsame Kategorien (356) vorhanden sind, welche von jeder tragbaren mobilen Kommunikationsvorrichtung gemeinsam benutzt werden;
Mittel (220, 250), um Informationsbrocken für gemeinsame Kategorien (360) mit der anderen tragbaren mobilen Kommunikationsvorrichtung auszutauschen;
Mittel (220), um dem Informationsbrocken, welcher von der anderen tragbaren mobilen Kommunikationsvorrichtung empfangen wird, einen Ortstempel hinzuzufügen;
Mittel (220, 230), um den mit einem Ort versehenen Informationsbrocken in der Datenbank zu speichern; und
Mittel (220), um einen Typ einer Information zu bestimmen, welcher am wahrscheinlichsten an einem bestimmten geographischen Ort gesammelt wird, abhängig von allen mit einem Ort versehenen Informationsbrocken, welche in der Datenbank gespeichert sind.

9. System nach Anspruch 8, darüber hinaus umfassend:
Mittel, um einen empfangenen Informationsbrocken auf einer Anzeige darzustellen (240), welche mit der tragbaren mobilen Kommunikationsvorrichtung (200) gekoppelt ist; und
Mittel, um den empfangenen Informationsbrocken in der Datenbank (230) zu speichern (220), welche für die tragbare mobile Kommunikationsvorrichtung (200) zugreifbar ist.

10. System nach Anspruch 8, darüber hinaus umfassend Mittel, um einen Datum/Zeit-Stempel dem empfangenen Informationsbrocken hinzuzufügen.

11. System nach Anspruch 8, **dadurch gekennzeichnet, dass** der Entdeckungsschritt umfasst:
Mittel (220, 250), um einen Signaturindikator (336) zu übertragen, um das Vorhandensein einer Informationsbrocken-Softwareapplikation (220) anzuzeigen; und Mittel (220, 250), um nach einer Signaturindikator-Bestätigung (340) zur horchen, um das Vorhandensein einer anderen Informationsbrocken-Softwareapplikation (220) anzuzeigen.

12. System nach Anspruch 8, **dadurch gekennzeichnet, dass** der Entdeckungsschritt darüber hinaus umfasst:
Mittel (220, 250), um nach einem Signaturindikator (336) zu horchen, um das Vorhandensein einer anderen Informationsbrocken-Softwareapplikation (220) anzuzeigen; und
Mittel (220, 250), um eine Signaturindikator-Bestätigung (340) zu übertragen, um das Vorhandensein einer Informationsbrocken-Softwareapplikation (220) anzuzeigen.

13. System nach Anspruch 8, **dadurch gekennzeichnet, dass** die Mittel (250), um eine Verbindung (348) mit der entdeckten tragbaren mobilen Kommunikationsvorrichtung zu erstellen, ein Bluetooth^{™}-Transceivermodul (250) sind, welches sich in der tragbaren mobilen Kommunikationsvorrichtung (200) befindet.

14. System nach Anspruch 8, **dadurch gekennzeichnet, dass** die Mittel (250), um eine Verbindung (348) mit der entdeckten tragbaren mobilen Kommunikationsvorrichtung zu erstellen, ein IRDA-Transceivermodul (250) sind, welches sich in der tragbaren mobilen Kommunikationsvorrichtung (200) befindet.

## Revendications

1. Procédé d'échange de pépites d'informations classées, stockées dans une base de données accessible à un dispositif de communication mobile portatif (200), avec d'autres dispositifs de communication mobile portatifs (200) équipés de manière similaire, le procédé comprenant les étapes consistant à :
découvrir la présence (336, 340) d'un autre dispositif de communication mobile portatif (200) capable d'échanger des pépites d'informations classées ;
établir une connexion (348) avec le dispositif de communication mobile portatif découvert ;
échanger des données de catégories des pépites d'informations avec l'autre dispositif de communication mobile portatif (352) afin de déterminer s'il existe des catégories (356) communes partagées par chacun des dispositifs de communication mobile portatifs ;
échanger des pépites d'informations dans des catégories communes (360) partagées avec l'autre dispositif de communication mobile portatif ;
ajouter un marqueur de position à la pépite d'information reçue de l'autre dispositif de communication mobile portatif ;
stocker dans une base de données la pépite d'information avec marqueur de position ; et
déterminer un type d'information qu'il est le plus probable de recueillir dans une position géographique particulière, en fonction de toutes les pépites d'informations avec marqueur de position qui sont stockées dans la base de données.

2. Procédé selon la revendication 1, comprenant en outre les étapes consistant à :
afficher (364) une pépite d'information reçue sur un écran d'affichage (240) couplé au dispositif de communication mobile portatif (200) ; et
sauvegarder (368) la pépite d'information reçue dans la base de données (332) accessible au dispositif de communication mobile portatif (200).

3. Procédé selon la revendication 1, comprenant en outre l'étape consistant à ajouter un horodatage à la pépite d'information reçue.

4. Procédé selon la revendication 1, dans lequel l'étape de découverte comprend les étapes consistant à :
émettre une balise de signature (336) destinée à indiquer la présence d'une application logicielle de pépites d'informations (220) ; et
écouter pour recevoir un accusé de réception de la balise de signature (340) destiné à indiquer la présence d'une autre application logicielle de pépites d'informations (220).

5. Procédé selon la revendication 1, dans lequel l'étape de découverte comprend en outre les étapes consistant à :
écouter pour recevoir une balise de signature (336) destinée à indiquer la présence d'une autre application logicielle de pépites d'informations (220) ; et
émettre un accusé de réception de balise de signature (340) destiné à indiquer la présence d'une application logicielle de pépites d'informations (220).

6. Procédé selon la revendication 1, dans lequel l'établissement d'une connexion (348) avec le dispositif de communication mobile portatif (200) découvert est réalisé par un module émetteur/récepteur Bluetooth^{™} (250) résidant sur le dispositif de communication mobile portatif (200).

7. Procédé selon la revendication 1, dans lequel l'établissement d'une connexion (348) avec le dispositif de communication mobile portatif (200) découvert est réalisé par un module émetteur/récepteur IRDA (250) résidant sur le dispositif de communication mobile portatif (200).

8. Système d'échange de pépites d'informations classées, stockées dans une base de données (230) accessible à un dispositif de communication mobile portatif (200), avec d'autres dispositifs de communication mobile portatifs (200) équipés de manière similaire, le système comprenant :
un moyen (220) destiné à découvrir la présence (336, 340) d'un autre dispositif de communication mobile portatif capable d'échanger des pépites d'informations classées ;
un moyen (250) destiné à établir une connexion (348) avec le dispositif de communication mobile portatif découvert ;
un moyen (220, 250) destiné à échanger des données de catégories des pépites d'informations avec l'autre dispositif de communication mobile portatif afin de déterminer s'il existe des catégories (356) communes partagées par chacun des dispositifs de communication mobile portatifs ;
un moyen (220, 250) destiné à échanger des pépites d'informations dans des catégories communes (360) partagées avec l'autre dispositif de communication mobile portatif ;
un moyen (220) destiné à ajouter un marqueur de position à la pépite d'information reçue de l'autre dispositif de communication mobile portatif ;
un moyen (220, 230) destiné à stocker dans une base de données la pépite d'information avec marqueur de position ; et
un moyen (220) destiné à déterminer un type d'information qu'il est le plus probable de recueillir dans une position géographique particulière, en fonction de toutes les pépites d'informations avec marqueur de position qui sont stockées dans la base de données.

9. Système selon la revendication 8, comprenant en outre :
un moyen destiné à afficher (240) une pépite d'information reçue sur un écran d'affichage couplé au dispositif de communication mobile portatif (200) ; et
un moyen destiné à sauvegarder (220) la pépite d'information reçue dans la base de données (230) accessible au dispositif de communication mobile portatif (200).

10. Système selon la revendication 8, comprenant en outre un moyen destiné à ajouter un horodatage à la pépite d'information reçue.

11. Système selon la revendication 8, dans lequel l'étape de découverte comprend :
un moyen (220, 250) destiné à émettre une balise de signature (336) destinée à indiquer la présence d'une application logicielle de pépites d'informations (220) ; et
un moyen (220, 250) destiné à écouter pour recevoir un accusé de réception de la balise de signature (340) destiné à indiquer la présence d'une autre application logicielle de pépites d'informations (220).

12. Système selon la revendication 8, dans lequel l'étape de découverte comprend en outre :
un moyen (220, 250) destiné à écouter pour recevoir une balise de signature (336) destinée à indiquer la présence d'une autre application logicielle de pépites d'informations (220) ; et
un moyen (220, 250) destiné à émettre un accusé de réception de balise de signature (340) destiné à indiquer la présence d'une application logicielle de pépites d'informations (220).

13. Système selon la revendication 8, dans lequel le moyen (250) destiné à établir une connexion (348) avec le dispositif de communication mobile portatif découvert est un module émetteur/récepteur Bluetooth^{™} (250) résidant sur le dispositif de communication mobile portatif (200).

14. Système selon la revendication 8, dans lequel le moyen (250) destiné à établir une connexion (348) avec le dispositif de communication mobile portatif découvert est un module émetteur/récepteur IRDA (250) résidant sur le dispositif de communication mobile portatif (200).
